Europäisches Patentamt

**European Patent Office**

Office européen des brevets

(11) Publication number: **0 133 743**
**A2**

(12) **EUROPEAN PATENT APPLICATION**

(21) Application number: **84304222.7**

(22) Date of filing: **22.06.84**

(51) Int. Cl.⁴: **B 60 G 15/06**

(30) Priority: **04.08.83 US 520476**

(43) Date of publication of application:
**06.03.85 Bulletin 85/10**

(84) Designated Contracting States:
**DE FR GB IT**

(71) Applicant: **GENERAL MOTORS CORPORATION**
**General Motors Building 3044 West Grand Boulevard**
**Detroit Michigan 48202(US)**

(72) Inventor: **Rezanka, Richard Lee**
**28127 Wexford**
**Warren Michigan, 48092(US)**

(72) Inventor: **Finn, Bernard John**
**2595 Avonhurst**
**Troy Michigan, 48084(US)**

(74) Representative: **Breakwell, John Neil Bower et al,**
**GM Patent Section Luton Office (F6) P.O. Box No. 3**
**Kimpton Road**
**Luton Beds. LU2 OSY(GB)**

(54) Serviceable suspension strut for an automotive vehicle.

㊼ A vehicle suspension strut (22) is arranged for onboard servicing of a shock absorber cartridge (30) through an access opening (48) in a mount tower (50) and through an upper mount (76) while the road wheel (17) remains on its support surface.

Fig. 2

EP 0 133 743 A2

### SERVICEABLE SUSPENSION STRUT FOR AN AUTOMOTIVE VEHICLE

This invention relates to an automotive vehicle as specified in the preamble of claim 1, for example as disclosed in US-A-4 200 307.

Shock absorber replacement on a MacPherson-type suspension strut generally involves labour-intensive procedures. In such struts, a shock absorber is often designed into an outer support tube which is a load-carrying element of the vehicle suspension. Such a strut may be referred to as a "wet build" strut. For service, this strut must be removed from the vehicle: this involves jacking the vehicle, removing the tyre and wheel assembly, and removing the strut assembly from the .vehicle. In a typical case, the suspension coil spring extends around the support tube from a lower seat attached thereto, and must be removed using a special spring-compressing fixture. Since the strut is a highly specialized suspension load-carrying component, it is expensive to remove and replace with a new strut, or to remove and rebuild with a new shock absorber, and in both cases subsequent "wheel alignment" is required.

To reduce strut replacement costs and improve strut serviceablity, shock absorbers have been designed as replacement cartridges for insertion within the support tube of the strut. Such struts are often referred to as "cartridge build" struts. However, the replacement of cartridges has often involved removal of the strut from the vehicle, generally along the lines indicated above.

With the need for such strut removal, a cartridge build strut does not materially reduce replacement service complexity and cost, even though the service cartridge itself may be less costly than a complete strut. Prior "on board" serviceable struts in which worn original cartridges are replaced with service cartridges have involved complex mount constructions and tedious service procedures. Also, special bolts securing a cover plate to an upper mount are undesirably loaded in tension during jounce travel and during bottoming of the jounce bumper. During service of this prior type of strut, camber setting is disturbed, so that the cover plate position must be precisely marked before dismantling, to allow the cover plate to be reassembled in the same place to maintain camber adjustment.

With the construction disclosed in the above US-A-4 200 307, the suspension spring is in effect seated at its upper end on the upper mount or anti-vibration unit, which has to be removed before replacement of the shock absorber can be effected.

The present invention is concerned with obtaining an advanced "on board" service improvement involving strut cartridge replacement whilst the vehicle is supported on its wheel, and without the necessity of strut removal and subsequent camber re-adjustment.

To this end, improved cartridge access is provided through a new and improved strut mount.

Specifically, an automotive vehicle in accordance with the present invention is characterised by the features specified in the characterising portion of claim 1.

This invention thereby eliminates vehicle jacking and wheel removal, and provides for the positive retention of the suspension spring and strut when the retention load on the upper strut is removed.

This invention also makes adequate provision for steering functions, and provides dual rate mount design and improved direction of the jounce control force path into the body tower structure so that the strut can remain as a support structure when it is serviced.

With this invention "wheel alignment" is not changed during cartridge service, so that the service mechanic need not be concerned with any alignment procedures.

In a preferred embodiment of an automotive vehicle in accordance with the present invention, a new and improved take-apart strut mount allows access to the strut cartridge through a central hole in the support tower. In servicing the cartridge, a rebound stop cover plate assembly is removed so that a special tool can be threaded on to the end of the strut piston rod. A cylindrical aligning tube is passed over the tool and through the access hole in the strut mount. This tube slips over the upper end of the strut, thereby acting to hold the strut in prescribed alignment with the mount for easy extraction or insertion of the cartridge after removal of the service nut. Replacement can alternatively be accomplished without the alignment tube, but is more difficult and time-consuming. By means of the special tooling which drivingly engages the threaded service nut on top of the strut, the support tube can be opened for cartridge removal and closed after a new cartridge has been inserted.

In order that jounce bumper loads be carried through the mount to the underside of the body tower structure, and to avoid loading mounting bolts, the jounce bumper has been designed with an annular shape which reacts against the coil spring bearing and into the mount itself. The jounce bumper is attached to the upper spring seat in the conventional manner, with fasteners that also serve to attach a weather boot. The jounce bumper engages an annular bracket which is welded to the strut reservoir tube. This bracket also serves as a support for the aligning tube which is slipped over the strut during the service operation.

The spring bearing assembly is designed with an inner opening to form a part of the cylindrical service access hole. This bearing assembly carries spring and jounce loads into the high-rate portion of the mount, and may be ride-tuned independently of the lower-rate mount for the shock absorber piston rod, which is retained by

0133743

-4-

the removable cover plate.

The invention additionally includes a method of installing a replacement shock absorber cartridge in an automotive vehicle, as specified in claim 8, and a method of servicing a shock absorber cartridge in an automotive vehicle, as specified in claim 9.

In the drawings:

Figure 1 is an isometric exploded view of a portion of a vehicle including a suspension strut interposed between a front wheel assembly and a mounting tower formed in the vehicle body;

Figure 2 is a fragmentary sectional view, with parts in elevation, of an upper portion of the suspension strut and a portion of the tower;

Figure 3 is a sectional view generally similar to Figure 2, but with parts removed and with service tooling being used to remove a shock absorber cartridge of the suspension strut;

Figure 4 is a cross-sectional view on the line 4-4 of Figure 3, in the direction of the arrows;

Figure 5 is an isometric view of service tooling used in the Figure 3 removal of the cartridge; and

Figure 6 is an isometric view illustrating removal of the worn cartridge with the service tooling.

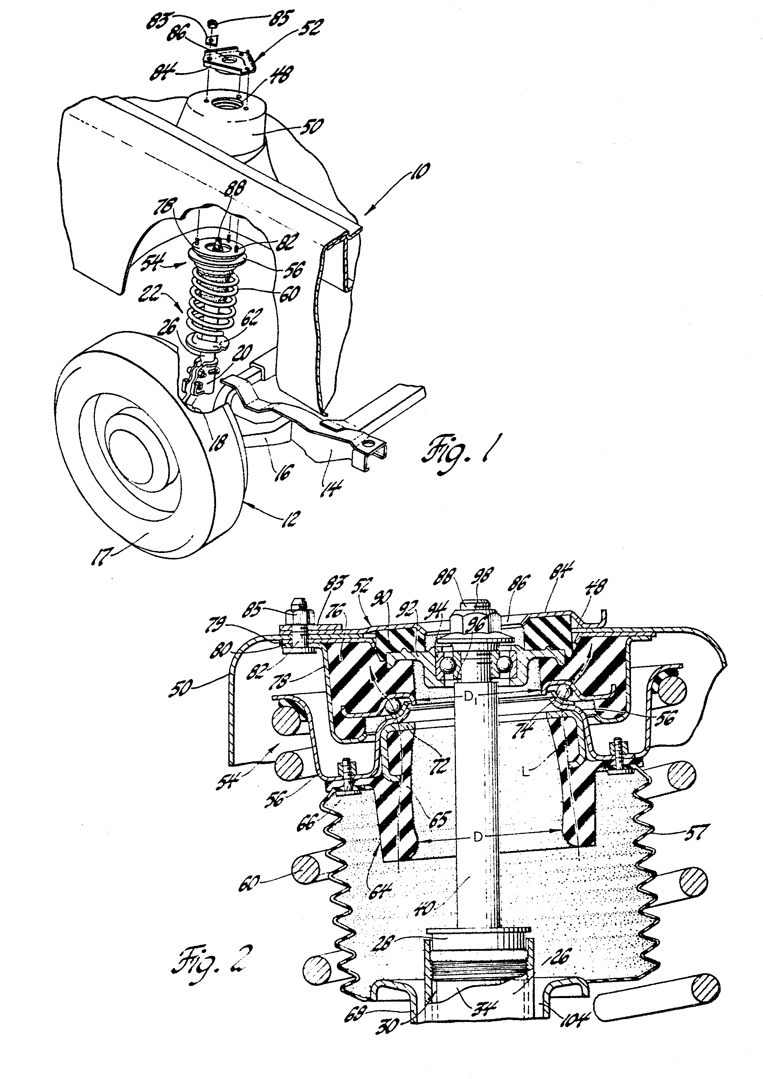

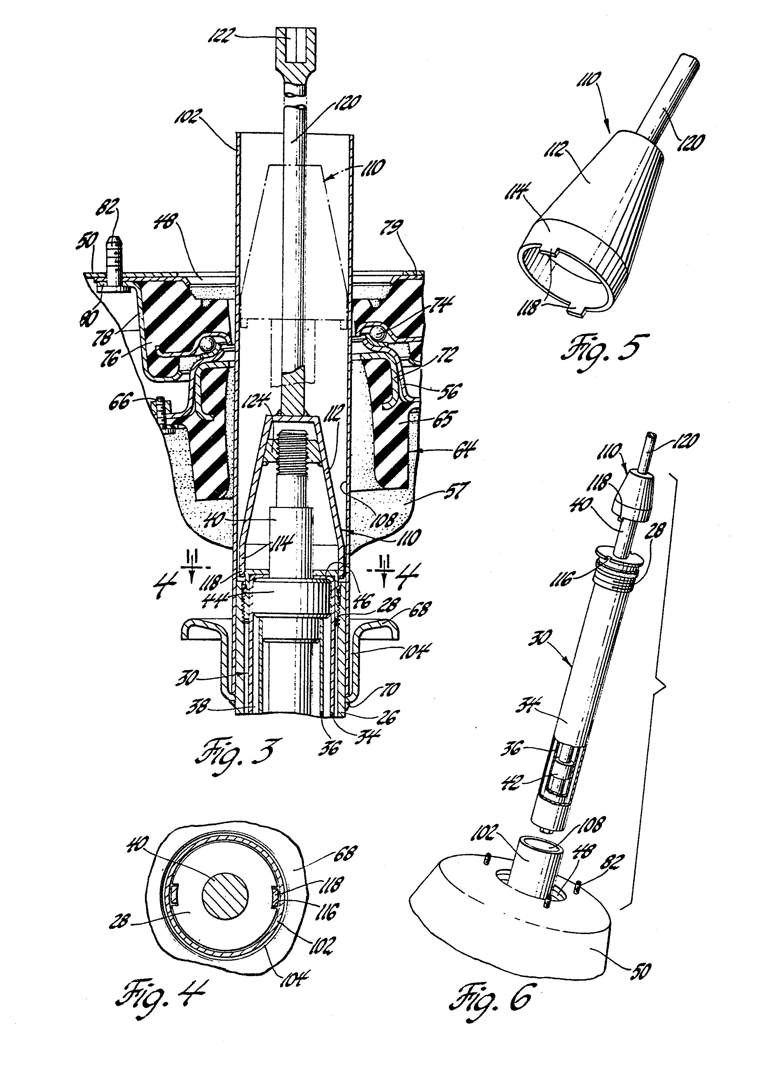

With reference now to the drawings, there is shown in Figure 1 a forward front quarter portion 10 of a motor vehicle having a steerable front wheel assembly 12 connected to a vehicle frame 14 by a lower control arm 16. The wheel assembly includes a conventional road wheel 17 mounted on a wheel spindle, and further includes a steering knuckle 18 having a cup-like lower mounting bracket 20 attached thereto. This mounting bracket provides the lower support for a vehicle suspension strut 22 which is a "cartridge build" unit such as is shown in Figures 3, 4 and 5 of US-A-4 276 971.

The suspension strut 22 has a cylindrical outer support tube 26 which fits in the lower mounting bracket 20 and extends upwardly therefrom. The upper end of the strut is closed by a service nut 28 which is threaded in the end of the support tube 26 and is effective to retain a shock absorber cartridge 30 in the support tube.

The shock absorber cartridge 30 is a conventional self-contained shock absorber (damper) unit which comprises an outer reservoir tube 34 that co-operates with an inner cylinder tube 36 to form a reservoir 38 for the shock absorber fluid of this unit. The clearance region between the cartridge reservoir tube and the support tube 26 is an air space which does not communicate with the interior of the cartridge.

The cartridge contains a conventional base valve, not shown, disposed on the lower end of the cylinder tube 36 to control flow of shock absorber fluid between the cylinder tube and the reservoir tube on the compression and rebound strokes, as explained in the above-mentioned US-A-4 276 971. A cylindrical piston rod 40 extends axially upwardly from a piston 42 that is slidably mounted in the cylinder tube, and through a rod guide and seal assembly 44 that is mounted in the upper end of the shock absorber cartridge. This rod guide and seal assembly 44 is retained in place by an inwardly turned end 46 of the reservoir tube. The piston rod 40 extends upwardly through a circular opening 48 in a tower 50 formed in the vehicle body, and is secured to this bodywork by a cover plate assembly 52 which forms an upper portion of a suspension mount 54. The suspension mount 54 further includes an annular upper spring seat 56 supported by the upper end coil of a helical suspension spring 60. The suspension spring 60 spirals around the outer support tube 26 of the strut from an annular spring support plate 62 that is welded or otherwise secured to the support tube just above the lower mounting bracket 20.

The upper spring seat 56 supports a convoluted weather boot 57 which protects the upper components of the strut. The seat 56 also has a jounce bumper 64 secured to it by threaded fasteners 66. This bumper 64 has a resilient cylindrical elastomer body 65 adapted to be engaged and deflected on road wheel jounce by an annular contact bracket 68 welded at 70 adjacent the upper end of the outer support tube 26, to cushion and limit jounce movement. The jounce bumper 64 further includes, at its upper end, a metallic jounce bumper stop 72 which seats against the inner wall of the spring seat 56 to provide a positive stop to limit jounce stroke. Jounce loads generally follow path L (Figure 2) through a mount 76 which is described below, and do not load any mounting bolts in tension.

Mounted on the upper side of the upper spring seat 56 is an inner race of an annular ball bearing unit 74. The outer race of this ball bearing unit is secured to a toroidal elastomer mount 76 by means of a cylindrical mounting bracket 78. A washer-like cover plate 79 is welded to an outer radial flange 80 of the mounting bracket 78 that fits against the lower surface of the tower 50 and is secured thereto by bolts 82. The bolts 82 have heads which are welded to the underside of the radial flange 80, and threaded shanks which extend upwardly through the flange 80, the cover plate 79, the top of the tower 50 and through rectangular washers 83. Hex nuts 85 are turned on the bolt shanks to secure the cover plate assembly 52, the mounting bracket 78 and the toroidal mount 76 to the tower 50.

A top plate 84 has an annular central opening 86 through which a threaded upper end portion 88 of the piston rod 40 extends. A piston rod jounce rubber 90 is bonded only to the lower surface of the top plate 84. A ball bearing unit 94 has an outer race entrapped in the inner annular wall of a shock absorber washer 92, as is best seen in Figures 2 and 3. The inner race of this ball bearing unit 94 seats on a shoulder 96 of the piston rod 40. A piston rod nut 98 is threaded on to the end portion 88 of the piston rod 40, and secures the bearing unit 94 and the shock absorber washer 92 as an assembly to the piston rod 40. The jounce rubber 90 bonded only to the top plate 84 provides a selected spring rate connection of the piston rod 40 to the tower 50.

The inner diameters D and $D_1$ (Figure 2) of the jounce bumper 64 and the elastomer mount 76 are greater than the diameter of the shock absorber cartridge 30, to permit removal of the cartridge in an axial direction after the cover plate assembly 52 has been removed as a unit from the tower 50. Removal of the cover plate assembly 52 is readily accomplished by initially removing the hex nuts 85 from the retaining bolts 82. The cover plate assembly 52 comprising the top plate 84 and the shock absorber jounce rubber 90 is manually grasped and removed as an assembly from the tower 50. The assembly constituted by the shock absorber washer 92 and the bearing unit 94 is not part of the cover plate assembly 52, and is not removed at this time. Since wheel camber is not disturbed with this procedure, the position of the top plate 84 does not have to be marked to ensure the same camber adjustment on re-assembly.

The lateral stiffness of the suspension spring 60 will hold the strut and the suspension in place while the strut is being serviced with conventional tools by a person of some mechanical skill. With the car jacked up, the road wheel 17 removed and the lower control arm supported, an installer can utilize conventional socket tools to remove the piston rod nut 98 and cover plate hex nuts 85 so that the cover plate assembly 52 (comprising the top plate 84 plus the jounce rubber 90) can be removed. After removal of the piston rod nut 98, the service nut 28 can then be removed with suitable tooling. The cartridge is then removed as a unit by manually grasping the piston rod 40 and drawing the cartridge axially out of the support tube 26 and through the openings in the jounce bumper 64 and the elastomeric mount 76. After installation of the shock absorber washer 92 and the ball bearing unit 94 on the replacement cartridge, with securing of these parts in place by means of the piston rod nut 98, installation of the replacement cartridge is the reverse of the procedure described above.

The upper mount construction which has been described allows convenient access to the service nut and then to the cartridge for removal with conventional tooling. The present invention further provides for removal of the cartridge-retaining service nut and extraction of the shock absorber cartridge without the need for jacking and removal of the road wheel or any suspension component. This tooling is best illustrated in 3 to 6, and includes a guide sleeve in the form of a cylindrical alignment and support tube 102 of a predetermined length and diameter for insertion axially through the circular opening 48 in the tower 50 and the openings in the elastomeric mount 76 and the jounce bumper 64. The lower end of the alignment and support tube 102 slips over the outer support tube 26 of the strut and into a cylindrical pocket 104 formed between the jounce bumper contact member 68 and the support tube 26. When installed, the alignment and support tube 102 acts as a connection between the outer support tube 26 of the strut and the toroidal elastomer mount 76 and its mounting bracket 76, to provide lateral support between the upper end of the strut and the tower. By the use of this lateral support the road wheel 17 can remain on the ground, and vehicle jacking is eliminated. The suspension load path L is through the elastomer mount 76 to the tower 50 around the opening 48, so that axial withdrawal of the worn cartridge, and replacement with a new unit, is facilitated.

With the alignment and support tube 102 in place, an inner cylindrical wall 108 thereof accomodates a special wrench 110 used for turning the service nut 28. The wrench 110 has a generally conical head 112 with an outer cylindrical surface 114 for slidably engaging the inner wall 108 of the alignment and support tube 102 so that tooth openings 116 of the service nut 28 can be readily engaged by teeth 118 projecting from the forward end of the head 112 of the wrench. The wrench head 112 has a central shank 120 welded thereto which extends to a terminal socket 122: the socket 122 provides a connection for a conventional ratchet or other wrenching tool to permit turning of the service nut 28 for removal or installation. The wrench head 112 has an interior nut 124 fixed thereto which is adapted to be threaded on to the threaded upper end portion 88 of the piston rod 40, to facilitate removal of the shock absorber cartridge 30 in a preferred service procedure. When the wrench is threaded on to the end portion of the piston rod it is thereby centred for subsequent coupling with the service nut. The service nut and the wrench head may be of hex formation, or alternatively of some other suitable shape.

When the cover plate assembly 52 has been removed from the tower 50, the piston rod 40 can be manually stroked outwardly and held. After removal of the piston rod nut 98 and the shock absorber washer 92 and bearing unit 94, the nut 124 of the special wrench 110 can be threaded on to the threaded upper end portion of the piston rod 40 to interconnect the tool and the piston rod. By means of this tool, the piston rod is manually centred in the alignment and support tube 102, so allowing this tube 102 to be then slipped over the wrench 110 and into the tool retainer pocket 104, whereby the strut is held in alignment with the opening in the tower 50. The wrench 110 can then be moved axially, so displacing the piston and piston rod, until contact is made with the service nut 28. By rotation of the wrench 110, the tooling lugs are moved into engagement with the tooth openings 116 in the service nut 28. The service nut 28 can then be turned and loosened from the top of the strut. The piston and rod turn with the wrench 110, and remain attached to it.

The wrench 110 is then moved axially to extract the cartridge from the unit. After this has been done, a new cartridge can be inserted into the strut, and the service nut 28 can be re-installed by utilizing a procedure which is the reverse of that described. After this has been done, the wrench 110 and the tube 102 are removed, and the washer 92 and piston rod nut are re-installed. Finally, the cover plate assembly 52 is re-installed, to complete the repair.

Claims:

1. An automotive vehicle in which a serviceable vehicle suspension strut (22) and a helical suspension spring (60) mount a road wheel (17) of the vehicle to a support (50) in the body of the vehicle, the support (50) having an access opening (48) for servicing the strut (22), characterised in that the strut (22) comprises an outer support tube (26) operatively connected to the vehicle road wheel (17) and extending upwardly therefrom, a hydraulic shock absorber cartridge (30) operatively mounted within the support tube (26) and separable therefrom, a helical suspension spring (60) as aforesaid having a lower end mounted to the support tube (26) and extending upwardly therearound, an upper mount assembly (54) for the strut (22), the upper mount assembly (54) having an annular spring seat (56) receiving the upper end of the suspension spring (60), an annular jounce bumper (64) fixed to the spring seat (56) so that jounce loads are transmitted therethrough, an elastomer mounting ring (76) which has an inner opening $(D_1)$ aligned with the access opening (48) and is mounted on the underside of the support (50), the elastomer mounting ring (76) having annular load contact with the spring seat (56) so that the suspension spring (60) supports the body of the vehicle, the upper mount assembly (54) further having a cover plate assembly (52) closing the access opening (48), the cover plate assembly (52) having an elastomeric connection to the piston rod (40) of the cartridge (30) in parallel with the mounting ring (76), fastener means (85) removably securing the cover plate assembly (52) to the support structure (50) and the piston rod (40) to the cover plate assembly (52) to leave the access opening (48) clear and thereby allow access to the strut (22) through the upper mount assembly (54), so that the shock absorber cartridge (30) can be removed and replaced by a replacement shock absorber while the road wheel (17) remains on the road.

2.  An automotive vehicle according to claim 1, characterised in that a service nut (28) is threadedly engaged on an upper end of the support tube (26) for retaining the shock absorber cartridge (30) therein, the jounce bumper (64) is secured to the spring seat (56) above the upper end of the support tube (26) and the service nut (28), an annular jounce bumper contact bracket (68) is secured to the support tube (26) below the jounce bumper (64), the contact bracket (68) is spaced from the support tube (26) to provide a pocket (104), a cylindrical guide sleeve (102) extends through the access opening (48) and into the pocket (104), and a wrenching tool (110) is insertable into the sleeve (102) for guidance thereby and for engaging and turning the service nut (28) for removal thereof and to move the cartridge (30) clear of the support tube (26) for the installation of a replacement cartridge and a service nut (28).

3.  An automotive vehicle according to claim 2, characterised in that the shock absorber cartridge (30) includes a piston rod (40) having a threaded upper end (88), and that the wrenching tool (110) includes interior nut means (124) for operatively engaging the threaded end (88) of the piston rod (40) to permit threaded connection therewith for withdrawal of the cartridge (30) through the guide sleeve (102).

4.  An automotive vehicle according to claim 3, characterised in that the guide sleeve (102) has an outer diameter to engage the access opening (48) in the support (50) and an inner diameter to engage an end portion of the strut (22) to provide lateral support for a strut while being serviced.

5.  An automotive vehicle according to claim 1 or 2, characterised in that a top cover plate (84) is removably attached to the support (50) for selective uncovering of the access opening (48) in the support (50) to provide access to the upper end of the strut (22).

6.  An automotive vehicle according to claim 5, characterised in that a piston rod (40) of the strut (22) is conncected to the top cover plate 84, and an upper surface of the elastomer mounting ring (76) engages the support (50) immediately outside the access opening (48) to provide support for the vehicle when the top cover plate (84) is removed and the piston rod is disconnected from the top cover plate (84).

7.  An automotive vehicle according to claim 6, characterised in that the elastomer mounting ring (76) has a first spring rate, and a resilient annular member (90) interconnects the piston rod (40) and the top cover plate (84) and has a spring rate lower than the spring rate of the mounting ring (76).

8.  A method of installing a replacement shock absorber cartridge in an automotive vehicle according to claim 3, characterised by the steps of disconnecting the piston rod (40) from the upper mount assembly (54), introducing the wrenching tool (110) axially through the access opening (48) into operative engagement with the service nut (28) of the support tube (26), disconnecting the service nut (28) from the support tube (26), operatively engaging the interior nut means (124) of the wrenching tool (110) with the threaded end (88) of the piston rod (40), withdrawing the shock absorber cartridge (30) in an axial direction from the support tube (26) and out through the access opening (48), introducing a replacement shock absorber cartridge into the support tube (26), threadedly connecting a service nut to the support tube (26) to thereby secure the replacement cartridge within the support tube (26), and re-connecting the piston rod (40) to the upper mount assembly (54) to thereby complete securement of the replacement shock absorber cartridge and securement of the suspension strut (22) to the support (50) in the body of the vehicle.

9.  A method of servicing a shock absorber cartridge in an automotive vehicle according to claim 3, characterised by the steps of removing the cover plate assembly (52) from the access opening (48) in the support (50), removing a retaining nut (98) and associated washer (92) from the threaded end (88) of the piston rod (40) of the shock absorber cartridge (30), engaging the interior nut means (124) of the wrenching tool (110) with the threaded end (88) of the piston rod (40), inserting the cylindrical guide sleeve (102) through the access opening (48) and over the upper end of the strut (22) to maintain alignment of the strut (22) with the access opening (48), manipulating the tool (110) until it drivingly engages the service nut (28) that is screwed on to the end portion of the support tube (26), unscrewing the service nut (28) until it is free of the support tube (26), and using the tool (110) to withdraw the cartridge and the service nut (28) simultaneously in an axial direction from the support tube (26) and out through the access opening (48) to leave the interior of the support tube (26) clear for the reception of a replacement cartridge to be retained in the support tube (26) by the service nut (28) when the same is re-attached to the support tube (26).

*Fig. 1*

*Fig. 2*

Fig. 3

Fig. 4

Fig. 5

Fig. 6